# FASCICULE DE BREVET EUROPEEN

(11) **EP 0 381 551 B1**
(45) Date de publication et mention de la délivrance du brevet: **15.12.1993**
(21) Numéro de dépôt: 90400168.2
(22) Date de dépôt: 22.01.1990
(51) Int. Cl.: G21C 17/06

(54) **Procédé et dispositif de détection par ultrasons de crayons combustibles non étanches dans un assemblage combustible**
Verfahren und Vorrichtung zum Auffinden mit Ultraschall von undichten Brennstäben im Brennstabbündel
Method and device for detecting leaking fuel rods in fuel assemblies by ultrasonic means

(30) Priorité: 30.01.1989 FR 8901132
(43) Date de publication de la demande: 08.08.1990
(73) Titulaire: FRAMATOME, 92400 Courbevoie (FR); COGEMA, F-78141 Velizy Villacoublay (FR)
(72) Inventeur: Bordy, Michel, F-69007 Lyon (FR); Descot, Pascal, F-42400 Saint Chamond (FR); Amiet, Pierre, F-69420 Vernet-Ampuis - Condrieu (FR)
(74) Mandataire: Bouget, Lucien

(56) Documents cités:
- EP-A- 0 018 290
- EP-A- 0 186 554
- EP-A- 0 298 387

## Description

L'invention concerne un procédé et un dispositif de détection par ultrasons de crayons combustibles non étanches dans un assemblage combustible d'un réacteur nucléaire.

Les assemblages combustibles des réacteurs nucléaires tels que les réacteurs refroidis par de l'eau sous pression sont réalisés sous la forme de faisceaux de crayons combustibles de grande longueur maintenus dans des dispositions où les crayons sont parallèles entre eux, par une ossature rigide fermée par deux embouts d'extrémité.

Chacun des crayons combustibles est constitué par une gaine tubulaire, généralement en un alliage de zirconium renfermant des pastilles de matériau combustible frittées et fermée a ses extrémités par des bouchons étanches, de manière que les pastilles de matériaux combustibles soient en contact avec un gaz inerte sous pression introduits dans la gaine.

Après un certain temps de présence dans le réacteur nucléaire en fonctionnement, certains crayons des assemblages combustibles du coeur peuvent être devenus défectueux par suite de la formation de fissures dans leur gaine, sous l'effet des contraintes mécaniques ou chimiques subies par ces crayons combustibles.

Les fissures traversant la gaine des crayons combustibles défectueux laissent échapper le gaz contenu dans la gaine qui peut renfermer des produits radio-actifs. L'eau de refroidissement du réacteur est susceptible de venir en contact direct avec les pastilles de crayons combustibles, ce qui peut conduire à la détérioration ou même à la destruction complète de ces pastilles et du crayon combustible.

Il est donc nécessaire de détecter très rapidement les assemblages combustibles du coeur dans lesquels un ou plusieurs crayons combustibles peuvent présenter des fuites.

Pendant les opérations de rechargement du coeur du réacteur nucléaire, les assemblages combustibles sont placés sous eau dans une piscine, avant d'être rechargés dans le coeur ou remplacés par des assemblages neufs.

On a proposé divers procédés de contrôle des assemblages combustibles placés sous eau dans une piscine, de manière à détecter et/ou à localiser des crayons combustible présentant des fuites dans ces assemblages.

La solution la plus courante consiste à placer les assemblages extraits d'un réacteur nucléaire, dans une cellule où ces assemblages sont chauffés de manière que la pression des gaz de fission contenus dans les crayons combustibles augmente et que ces gaz s'échappent dans la cellule par les fissures des crayons défectueux. Cette méthode ne permet cependant pas d'identifier les crayons défectueux à remplacer.

On a proposé d'autre part de nombreuses techniques de détection par ultrasons des crayons combustibles présentant des fuites.

En particulier, dans la demande de brevet d'invention FR-A-2.538.155, on a proposé un procédé et un dispositif de détection d'éléments combustibles défectueux, par une méthode d'absorption ultrasonore. On émet dans la gaine de l'élément combustible, à partir d'une extrémité de cette gaine constituée par un bouchon, un train d'ondes ultrasonores à une fréquence et d'une durée choisies pour que la propagation s'effectue en ondes de Lamb. On réalise la détection des échos, au niveau du bouchon à partir duquel on émet les ondes ultrasonores, pour des fréquences différentes, situées dans une plage de fréquences dont une fraction correspond à une absorption notable par l'eau éventuellement contenue dans la gaine et une autre à une formation importante d'un écho sur un défaut mécanique de la gaine.

En effet, dans le cas où une gaine est fissurée, les pastilles contenues dans cette gaine se trouvent en contact avec un film d'eau qui s'est infiltrée dans le crayon combustible, lorsque la pression du gaz de remplissage est devenue suffisamment faible. Ce film d'eau entourant les pastilles à l'intérieur de la gaine provoque une atténuation très importante des ondes de Lamb en mode S₀, c'est-à-dire des ondes ultrasonores à une fréquence telle qu'elles se propagent en mode de plaque à l'intérieur de la gaine du crayon, suivant sa direction longitudinale.

Dans la mesure où ces ondes de Lamb ne sont que très peu atténuées par l'eau dans laquelle baigne la gaine du crayon ou seraient de même très peu atténuées par de l'eau remplissant la totalité du volume interne de la gaine, une forte atténuation permet de détecter de manière sûre la présence de fuites dans un crayon combustible.

Cependant, dans le cas où l'émission et le captage des ondes ultrasonores sont effectuées au contact d'un même bouchon d'étanchéité du crayon, généralement le bouchon situé à l'extrémité supérieure de ce crayon, l'atténuation mesurée traduit surtout la présence d'eau au-dessus de la colonne de pastilles combustibles et en-dessous du bouchon, dans une zone où se trouve un ressort de maintien des pastilles combustibles. La détection n'est donc pas très sensible dans le cas de fissures de petites dimensions et il est nécessaire de compléter la méthode de détection par une détection ultrasonore de type classique, par échos sur les défauts mécaniques de la gaine.

On peut utiliser un transducteur ultrasonore placé directement en contact avec l'extrémité supérieure des bouchons de chacun des crayons de l'assemblage, après démontage de l'embout supérieur, ou encore des transducteurs ultrasonores fixés sur des dispositifs en forme de lames appelés sabres qui peuvent être glissés entre les rangées de crayons combustibles. Dans ce dernier cas, il n'est pas nécessaire de démonter l'embout supérieur de l'assemblage.

Cependant, comme il a été indiqué plus haut, la méthode de détection risque de manquer de sensibilité ou d'être d'une mise en oeuvre et d'une exploitation délicates.

Le but de l'invention est donc de proposer un procédé de détection par ultrasons de crayons combustibles non étanches dans un assemblage combustible pour réacteur nucléaire constitué par un faisceau de crayons parallèles entre eux disposés dans une ossature fermée par deux embouts d'extrémité, l'assemblage étant plongé, après utilisation dans un réacteur nucléaire, dans l'eau d'une piscine et disposé de manière que les crayons soient en position verticale et une détection des crayons dont la gaine présente des fissures génératrices de fuites étant assurée par émission d'ondes ultrasonores suivant la longueur des crayons, depuis une zone voisine de leurs extrémités supérieures, et par mesure d'atténuation des ondes ultrasonores due à la présence d'eau à l'intérieur des crayons dont la gaine est fissurée, ce procédé étant d'une grande sensibilité et d'une mise en oeuvre simple.

Dans ce but, on capte les ondes ultrasonores après propagation dans la gaine des crayons de l'assemblage combustible suivant toute leur longueur, en-dessous de l'embout inférieur en place sur l'assemblage.

L'invention concerne également un dispositif de détection permettant la mise en oeuvre du procédé suivant l'invention.

Afin de bien faire comprendre l'invention, on va maintenant décrire, en se référant aux figures jointes en annexe, plusieurs modes de réalisation d'un dispositif de détection et de sa mise en oeuvre dans le cadre du procédé de détection suivant l'invention.

La figure 1 est une vue partielle et schématique d'un assemblage combustible, pendant une opération de détection de fuites dans un crayon combustible, suivant un premier mode de réalisation.

La figure 2 est une vue schématique partielle en perspective d'un assemblage combustible, pendant une opération de détection de crayons défectueux, suivant un second mode de réalisation.

La figure 3 est une vue schématique partielle en perspective d'un assemblage combustible, pendant une opération de détection de crayons combustibles défectueux, suivant un troisième mode de réalisation.

La figure 4 est une vue schématique partielle en perspective d'un assemblage combustible, pendant une opération de détection de crayons défectueux, suivant un quatrième mode de réalisation.

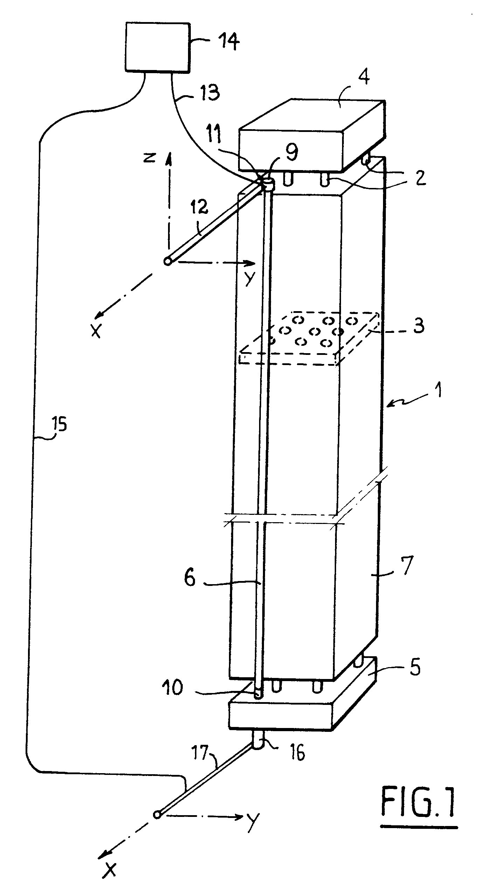

Sur la figure 1, on voit un assemblage combustible désigné de manière générale par le repère 1 comportant une ossature constituée principalement par des tubes-guides 2, des plaques entretoises telles que 3 et des embouts d'extrémité 4 et 5.

Les crayons combustibles tels que 6 sont maintenus par les grilles-entretoises 3 pour constituer un faisceau de forme prismatique (à base carrée), dans lequel les crayons combustibles 6 sont tous parallèles entre eux. Le contour de la zone de forme prismatique renfermant le faisceau de crayons combustibles 6 a été représenté sur la figure 1 et désigné par le repère 7.

Les crayons combustibles 6 présentent une longueur inférieure à la longueur des tubes-guides 2, si bien que leurs extrémités supérieures et inférieures respectivement constituées par des bouchons de fermeture 9 et 10 de la gaine du crayon se trouvent à une certaine distance de la face inférieure de l'embout supérieur 4 et de la face supérieure de l'embout inférieur 5.

Le procédé suivant l'invention peut être mis en oeuvre par un dispositif constitué par un bras 12 portant à son extrémité un transducteur ultrasonore 11 et relié à un dispositif de déplacement suivant trois directions X, Y, Z constituant un trièdre trirectangle. Le dispositif de déplacement du bras 12 qui n'a pas été représenté peut être constitué par exemple par une perche verticale portant une table à mouvements croisés, par l'intermédiaire d'un chariot mobile verticalement sur la perche.

Le bras 12 peut être constitué par un bras porteur susceptible de venir placer le transducteur 11 en contact avec la surface supérieure du bouchon 9 après démontage de l'embout supérieur 4 ou par un sabre susceptible de venir placer le transducteur 11 en contact avec la surface latérale du crayon 6, au voisinage du bouchon 9.

Les dispositifs correspondants de mise en place d'un transducteur ultrasonore à l'extrémité d'un crayon combustible quelconque d'un assemblage sont bien connus de l'art antérieur et ne seront donc pas décrits en détail.

Le transducteur 11 est alimenté par l'intermédiaire d'un câble 13, à partir d'une station d'exploitation des mesures ultrasonores 14 se trouvant au-dessus du niveau de la piscine.

Le dispositif de détection permettant de mettre en oeuvre le procédé suivant l'invention comporte de plus une sonde ultrasonore réceptrice fixée à l'extrémité d'un bras 17 relié à un dispositif de déplacement du bras 17 et de la sonde 16 dans deux directions horizontales perpendiculaires entre elles X et Y. Le dispositif de déplacement du bras 17 et de la sonde 16 peut être constitué par une table à mouvements croisés placée à un niveau légèrement inférieur au niveau de l'embout inférieur 5 de l'assemblage combustible.

Pour la mise en oeuvre de l'invention, l'assemblage combustible peut être suspendu au pont desservant la piscine de stockage des assemblages combustibles, de manière que son embout inférieur 5 vienne se placer au-dessus de l'extrémité du bras 17 portant la sonde réceptrice ultra sonore 16.

La sonde 16 est reliée par un câble 15 à la station 14 d'exploitation des mesures ultrasonores.

Le bras 17 permet de déplacer la sonde 16 de manière à lui faire occuper successivement toutes les positions situées à la verticale des bouchons inférieurs 10 des crayons combustibles 6, en-dessous de l'embout 5.

De la même manière, la sonde 11 peut être déplacée de manière à venir en contact avec la partie supérieure d'un crayon combustible quelconque 6 et à émettre dans la gaine de ce crayon, suivant la direction longitudinale, un train d'ondes de Lamb qui sont captées par la sonde réceptrice 16 placée à l'aplomb du bouchon inférieur 10 du crayon combustible 6 dans lequel on émet le train d'ondes.

On effectue ainsi une mesure d'atténuation des ondes ultrasonores au niveau du poste d'exploitation 14 permettant de détecter la présence éventuelle de fissures génératrices de fuites dans le crayon 6 dont la gaine est parcourue par les ondes ultrasonores.

Cette méthode de captage des ondes directement transmises est plus sensible et plus sûre que les méthodes connues antérieurement nécessitant une réflexion des ondes sur le bouchon inférieur 10 du crayon ou la présence d'eau dans la partie supérieure du crayon.

D'autre part, la sonde réceptrice 16 peut être mise en place successivement à l'aplomb de chacun des crayons 6 de l'assemblage combustible, sans démontage de l'embout inférieur 5.

Dans le cas des embouts de type classique des assemblages combustibles des réacteurs nucléaires à eau sous pression, la distance entre la sonde réceptrice 16 et le bouchon inférieur 10 du crayon 6 est de l'ordre de 100 mm, cette distance pouvant toutefois être réduite par le fait que la sonde 16 peut être introduite à l'intérieur d'une partie creuse de l'embout 5, délimitée par les pieds supports de l'assemblage.

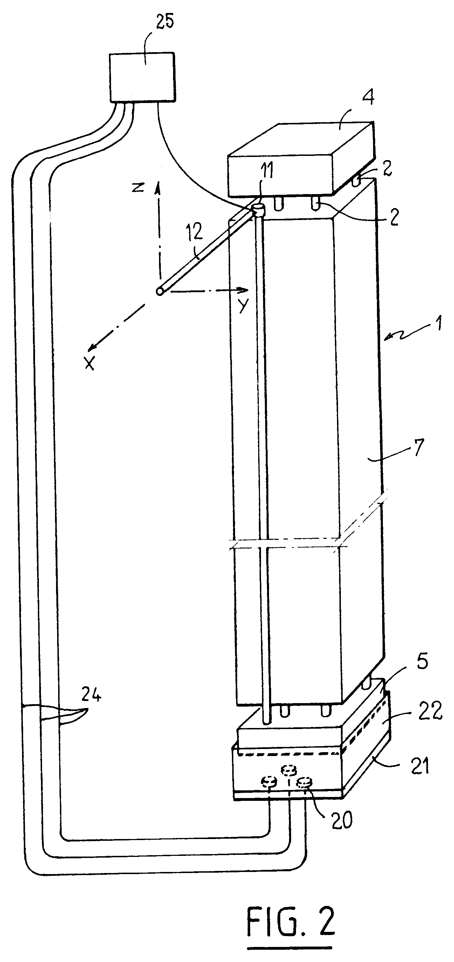

Sur la figure 2, on voit un second mode de réalisation de la mise en oeuvre du procédé suivant l'invention, les éléments correspondants sur les figures 1 et 2 portant les mêmes repères.

A la différence de l'ensemble de détection représenté sur la figure 1, l'ensemble de détection représenté sur la figure 2 comporte, au lieu d'une seule sonde réceptrice portée par un bras de déplacement, un ensemble de sondes réceptrices 20 portées par le fond 21 d'un socle 22 dans lequel vient s'engager embout inférieur 5 de l'assemblage combustible 1.

Les sondes réceptrices 20 sont reliées chacune par un câble 24 à un poste de mesure et de détection 25 situé au niveau supérieur de la piscine du combustible.

Comme précédemment, le transducteur ultrasonore 11 peut être déplacé de l'extrémité supérieure d'un crayon combustible 6 à l'extrémité supérieure d'un autre crayon combustible, grâce à un dispositif de déplacement suivant les direction X, Y et Z d'un bras 12 portant à son extrémité le transducteur 11.

Chacune des sondes réceptrices 20 peut être associée à un ou plusieurs crayons combustibles 6 de manière à capter les ondes ultrasonores après propagation dans les crayons 6 suivant la direction longitudinale.

Dans le cas où une atténuation supérieure à une limite prédéterminée est enregistrée, on en conclut que le crayon 6 sur lequel on réalise la mesure présente une fuite.

Le socle 22 peut reposer dans le fond de la piscine ou sur un support disposé à une certaine hauteur à l'intérieur de la piscine. L'assemblage combustible peut être suspendu au pont desservant la piscine pour permettre l'engagement de son embout inférieur 5 dans le socle 22.

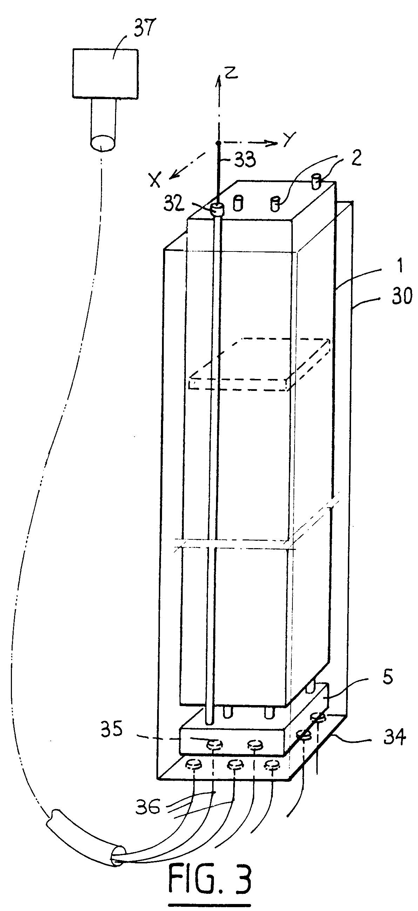

Sur la figure 3, on a représenté un ensemble de détection suivant un troisième mode de réalisation permettant de mettre en oeuvre le procédé suivant l'invention.

L'assemblage 1 dont on effectue le contrôle est disposé à l'intérieur du réceptacle 30 d'un dispositif descenseur permettant de faire passer les assemblages combustibles depuis le niveau supérieur de la piscine jusqu'en fond de piscine. Un tel dispositif descenseur est fixé contre une paroi de la piscine du combustible et comporte des rails de guidage sur lesquels se déplace un chariot, dans la direction verticale. Le réceptacle 30 est fixé sur le chariot et permet de recevoir un assemblage combustible 1 en position verticale.

Un transducteur d'ultrasons 32 est fixé à l'extrémité d'un bras vertical 33 lui-même relié à un dispositif de déplacement dans trois directions X, Y et Z, la direction Z correspondant à la direction verticale et les directions X et Y à deux directions horizontales perpendiculaires entre elles.

Ce dispositif permet de déplacer le transducteur d'ultrasons 32 depuis l'extrémité d'un crayon combustible 6 constitué par le bouchon supérieur de ce crayon combustible jusqu'à l'extrémité supérieure d'un autre crayon combustible de l'assemblage. Les mesures sont effectuées avec l'embout supérieur 4 démonté, de manière que l'ensemble des crayons combustibles 6 soit accessible depuis la partie supérieure de l'assemblage.

Le fond 34 du réceptacle 30 destiné à recevoir l'assemblage combustible 1 placé dans le descenseur porte un ensemble de sondes réceptrices 35 reliées chacune par un câble 36 à une station de contrôle et de détection 37 située au-dessus du niveau de la piscine.

L'alimentation et la commande des transducteurs 32 et de leur dispositif de déplacement sont également assurées depuis la station de commande et de détection 37.

Chacune des sondes réceptrices 35 est susceptible de recevoir les ondes ultrasonores après leur propagation suivant la longueur d'au moins un crayon 6 de l'assemblage combustible. Généralement les sondes 35 sont en un nombre inférieur au nombre des crayons 6 et disposées suivant un réseau régulier, de sorte que chacune des sondes 35 soit susceptible de capter les ondes ultrasonores provenant d'un ensemble de crayons 6 de l'assemblage.

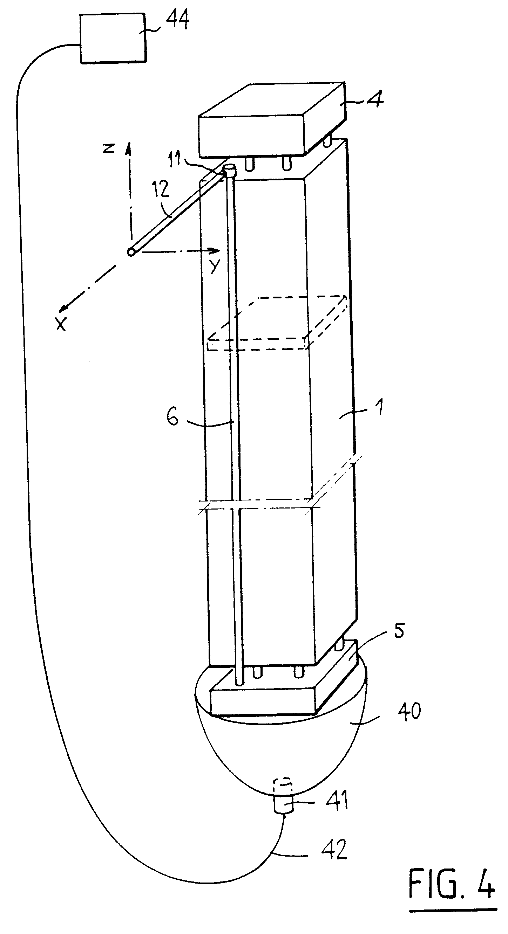

Sur la figure 4, on voit un ensemble de détection suivant un quatrième mode de réalisation, les éléments correspondants sur la figure 4 et sur les figures 1, 2 et 3 portant les mêmes repères.

A la différence des ensembles de détection représentés sur les figures 1 et 2, l'ensemble de détection représenté sur la figure 4 comporte un guide d'ondes de forme sensiblement hémisphérique 40 dans la partie d'extrémité ouverte duquel est engagé l'embout inférieur 5 de l'assemblage.

Une sonde réceptrice unique 41 est fixée à la partie centrale du guide d'ondes 40 et reliée par un câble 42 à une station de mesure et de détection 44 située au-dessus du niveau supérieur de la piscine.

Comme dans le cas des ensembles de détection représentés sur les figures 1 et 2, un transducteur 11 fixé à l'extrémité d'un bras 12 peut être déplacé dans la direction verticale Z et dans deux directions X et Y perpendiculaires entre elles, de manière que le transducteur 11 soit mis successivement en contact avec les bouchons d'extrémité supérieurs de chacun des crayons combustibles 6 de l'assemblage 1.

Les ondes ultrasonores sont captées, après leur propagation suivant la direction longitudinale du crayon 6, par la sonde réceptrice 41, grâce au dispositif guide d'ondes 40.

Les signaux de mesure sont transmis sous forme électrique par le câble 42 à la station de contrôle et de détection 44 où la mesure d'atténuation des ultrasons permet de déterminer la présence d'un crayon combustible 6 présentant des fuites, chaque fois que l'atténuation dépasse une certaine valeur prédéterminée.

La détection est effectuée comme précédemment pour chacun des crayons de l'assemblage successivement.

Dans tous les cas, la détection est effectuée de manière très sûre et très sensible sans démontage de l'embout inférieur 5 de l'assemblage.

L'invention ne se limite pas aux modes de réalisation qui ont été décrits.

C'est ainsi qu'on peut imaginer d'autres dispositions de sondes réceptrices en-dessous de l'embout inférieur d'un assemblage combustible qui peut être suspendu par son embout supérieur à un moyen de levage et de manutention, déposé sur un support dans le fond de la piscine ou dans un dispositif quelconque de déplacement ou de support tel qu'un descenseur ou tout autre moyen de manutention de l'assemblage.

Les sondes peuvent être regroupées de manière quelconque pour assurer le captage des ondes ultrasonores provenant de l'ensemble des crayons combustibles de l'assemblage ou associées à des moyens de guidage d'ondes permettant d'éviter l'utilisation d'un grand nombre de sondes.

L'invention peut être appliquée à la détection par ultrasons de crayons combustibles défectueux dans des assemblages combustibles de tout réacteur nucléaire refroidi par de l'eau.

## Revendications

1. Procédé de détection par ultrasons de crayons combustibles non étanches dans un assemblage combustible pour réacteur nucléaire constitué par un faisceau de crayons (6) parallèles entre eux disposés dans une ossature (2, 3, 4, 5) fermée par deux embouts d'extrémité (4, 5), l'assemblage (1) étant plongé, après utilisation dans un réacteur nucléaire, dans l'eau d'une piscine et disposé de manière que les crayons (6) soient en position verticale et une détection des crayons dont la gaine présente des fissures génératrices de fuites étant assurée par émission d'ondes ultrasonores suivant la longueur des crayons, depuis une zone voisine de leurs extrémités supérieures (9), et par mesure d'atténuation des ondes ultrasonores due à la présence d'eau à l'intérieur des crayons (6) dont la gaine est fissurée, caractérisé par le fait qu'on capte les ondes ultrasonores après propagation dans la gaine des crayons (6) de l'assemblage combustible suivant toute leur longueur, en-dessous de l'embout inférieur (5) en place sur l'assemblage (1).

2. Procédé de détection suivant la revendication 1, caractérisé par le fait qu'on émet des ondes ultrasonores successivement suivant la longueur de chacun des crayons combustibles (6) de l'assemblage combustible (1), qu'on détermine successivement, pour chacun des crayons combustibles (6), l'atténuation des ultrasons et qu'on compare cette atténuation à une valeur prédéterminée.

3. Procédé de détection suivant la revendication 2, caractérisé par le fait qu'on déplace une sonde réceptrice unique (16) en-dessous de l'embout inférieur (5) de l'assemblage, de manière à réaliser successivement le captage des ondes ultrasonores émises dans chacun des crayons combustibles (6) de l'assemblage.

4. Procédé de détection suivant la revendication 2, caractérisé par le fait qu'on capte les ondes ultrasonores émises successivement dans chacun des crayons combustibles (6) de l'assemblage, par une sonde (20, 35) en position fixe faisant partie d'un ensemble de sondes disposées en-dessous de l'embout inférieur (5) de l'assemblage combustible (1).

5. Procédé de détection suivant l'une quelconque des revendications 1 à 4, caractérisé par le fait que les ondes ultrasonores sont émises dans les crayons combustibles, depuis leur partie supérieure, l'embout supérieur (4) étant en place sur l'assemblage.

6. Procédé de détection suivant l'une quelconque des revendications 1 à 4, caractérisé par le fait que les ondes ultrasonores sont émises dans les crayons combustibles (6), depuis leur partie supérieure, l'embout supérieur (4) de l'assemblage étant démonté.

7. Dispositif de détection par ultrasons de crayons combustibles défectueux dans un assemblage pour un réacteur nucléaire constitué par un faisceau de crayons (6) parallèles entre eux disposés dans une ossature (2, 3, 4, 5) fermée par deux embouts d'extrémité (4, 5), l'assemblage (1) étant plongé dans l'eau d'une piscine et disposé de manière que les crayons (6) soient en position verticale et une détection des crayons dont la gaine présente au moins une fissure génératrice de fuite étant assurée par émission d'ondes ultrasonores suivant la longueur des crayons et par mesure d'atténuation des ondes ultrasonores due à la présence d'eau à l'intérieur des crayons (6) dont la gaine est fissurée, caractérisé par le fait qu'il comporte un transducteur d'ultrasons (11) fixé à l'extrémité d'un bras (12) relié à un dispositif de déplacement permettant de disposer successivement le transducteur (11) en contact avec l'extrémité supérieure de chacun des crayons (6) de l'assemblage et au moins un moyen de captage (16, 20, 34, 41, 40) des ondes ultrasonores émises suivant la longueur des crayons (6), disposé en-dessous de l'embout inférieur (5) de l'assemblage.

8. Dispositif de détection suivant la revendication 7, caractérisé par le fait que le moyen de captage (16) des ondes ultrasonores est constitué par une sonde réceptrice fixée à l'extrémité d'un bras (17) mobile dans deux directions perpendiculaires d'un plan horizontal situé en-dessous de la surface inférieure de l'embout inférieur (5) de l'assemblage (1).

9. Dispositif de détection suivant la revendication 7, caractérisé par le fait que le moyen de captage des ondes ultrasonores est constitué par une pluralité de sondes réceptrices (20) disposées sur le fond (21) d'un socle (22) de forme prismatique ouvert à sa partie supérieure dans laquelle l'embout (5) de l'assemblage peut être engagé pour être disposé au-dessus de l'ensemble des sondes réceptrices (20).

10. Dispositif de détection suivant la revendication 7 caractérisé par le fait que le moyen de captage des ondes ultrasonores est constitué par un ensemble de sondes réceptrices (35) fixées sur le fond (34) d'un réceptacle (30) pour un assemblage combustible (1) fixé sur le chariot à déplacement vertical d'un descenseur d'assemblage combustible disposé contre une paroi de la piscine.

11. Dispositif de détection suivant la revendication 7, caractérisé par le fait que le moyen de captage d'ondes ultrasonores est constitué par un guide d'ondes (40) ayant une extrémité ouverte dans laquelle est engagé l'embout inférieur (5) de l'assemblage combustible (1) et au moins une sonde ultrasonore (41 ) fixée sur la paroi du guide d'ondes (40).

12. Dispositif de détection suivant la revendication 11, caractérisé par le fait que le guide d'ondes (40) présente une forme hémisphérique.

## Patentansprüche

1. Verfahren zum Auffinden von undichten Brennstäben mittels Ultraschall in einer Anordnung von Brennstäben für Kernreaktoren, aufgebaut aus einem Bündel untereinander paralleler Stäbe (6), die in einem Tragwerk (2, 3, 4, 5) angeordnet sind, welches durch zwei End-Ansatzstücke (4, 5) verschlossen ist, bei dem die Anordnung (1), nach der Verwendung in einem Kernreaktor, in das Nasser eines Beckens eingetaucht und derart angeordnet wird, daß sich die Stäbe (6) in vertikaler Position befinden, und bei dem ein Auffinden von Stäben, deren Hülle äußere Undichtigkeits-Risse zeigt, durch Aussenden von Ultraschallwellen entlang der Länge der Stäbe, von einem Gebiet benachbart ihrer oberen Enden (9) her, und durch Messen der Dämpfung der Ultraschallwellen aufgrund des Vorliegens von Wasser im Inneren der Stäbe (6), deren Hülle gerissen ist, sichergestellt wird, dadurch gekennzeichnet, daß die Ultraschallwellen nach Fortpflanzen in der Hülle der Stäbe (6) der Brennanordnung inrer gesamten Länge folgend aufgenommen werden, unterhalb des unteren Ansatzstückes (5) an der Anordnung (1).

2. Auffindeverfahren nach Anspruch 1, dadurch gekennzeichnet, daß Ultraschallwellen sukzessiv der Länge jedes der Brennstäbe (6) der Brennanordnung (1) folgend ausgesendet werden, daß sukzessiv für jeden der Brennstäbe (6) die Dämpfung des Ultraschalls bestimmt wird und daß diese Dämpfung mit einem vorbestimmten Wert verglichen wird.

3. Auffindeverfahren nach Anspruch 2, dadurch gekennzeichnet, daß eine einzelne Empfängerssonde (16) unterhalb des unteren Ansatzstückes (5) der Anordnung (1) angeordnet wird, um sukzessiv das Aufnehmen der Ultraschallwellen, die bei jedem der Brennstäbe (6) der Anordnung ausgesendet werden, zu bewerkstelligen.

4. Auffindeverfahren nach Anspruch 2, dadurch gekennzeichnet, daß die Ultraschallwellen, die sukzessiv bei jedem der Brennstäbe (6) der Anordnung ausgesendet werden, durch eine Sonde (20, 35) in fester Position, die Teil einer Gesamtheit von Sonden, die unterhalb des unteren Ansatzstückes (5) der Brennanordnung (1), angeordnet ist, ist, aufgenommen werden.

5. Auffindeverfahren nach einem der Ansprüche 1 bis 4, dadurch gekennzeichnet, daß die Ultraschallwellen in die Brennstäbe ausgesendet werden, von ihrem oberen Teil her, wobei das obere Ansatzstück (4) an seiner Stelle auf der Anordnung ist.

6. Auffindeverfahren nach einem der Ansprüche 1 bis 4, dadurch gekennzeichnet, daß die Ultraschallwellen in die Brennstäbe (6) ausgesendet werden, von ihrem oberen Teil her, wobei das obere Ansatzstück (4) der Anordnung demontiert ist.

7. Vorrichtung zum Auffinden von schadhaften Brennstäben mittels Ultraschall in einer Anordnung von Brennstäben für Kernreaktoren, aufgebaut aus einem Bündel untereinander paralleler Stäbe (6), die in einem Tragwerk (2, 3, 4, 5) angeordnet sind, welches durch zwei End-Ansatzstücke (4, 5) verschlossen ist, wobei die Anordnung (1) in das Wasser eines Beckens eingetaucht und derart angeordnet ist, daß sich die Stäbe (6) in vertikaler Position befinden, und wobei ein Auffinden von Stäben, deren Hülle äußere Undichtigkeits-Risse zeigt, durch Aussenden von Ultraschallwellen entlang der Lange der Stäbe, von einem Gebiet benachbart ihrer oberen Enden (9) her, und durch Messen der Dämpfung der Ultraschallwellen aufgrund des Vorliegens von Wasser im Inneren der Stäbe (6), deren Hülle gerissen ist, sichergestellt wird, dadurch gekennzeichnet, daß sie einen Ultraschallwandler (11), am äußeren Ende eines Armes (12) befestigt, der mit einer Verlagerungseinrichtung verbunden ist, welche es erlaubt, den Wandler (11) sukzessiv in Kontakt mit dem oberen Ende jedes der Stäbe (6) der Anordnung zu verlagern, und wenigstens eine Aufnahmeeinrichtung (16, 20, 34, 41, 40) für die Ultraschallwellen, die der Länge der Stäbe (6) folgend ausgesendet werden, unterhalb des unteren Ansatzstückes (5) an der Anordnung (1) angeordnet, umfaßt.

8. Auffindevorrichtung nach Anspruch 7, dadurch gekennzeichnet, daß die Aufnahmeeinrichtung (16) für die Ultraschallwellen aus einer Empfängersonde gebildet ist, die am äußeren Ende eines Armes (17) befestigt ist, welcher in zwei Richtungen senkrecht zu einer horizontalen Ebene beweglich ist, die unterhalb der Unterfläche ces unteren Ansatzstückes (5) der Anordnung (1) gelegen ist.

9. Auffindevorrichtung nach Anspruch 7, dadurch gekennzeichnet, daß die Aufnahmeeinrichtung für die Ultraschallwellen aus einer Vielzahl von Empfängersonden (20) gebildet ist, die am Boden (21) eines Sockels (22) prismatischer Form, der an seinem oberen Teil offen ist, in den das Ansatzstück (5) der Anordnung in Eingriff gebracht werden kann, damit es oberhalb der Gesamtheit der Empfängersonden (20) angeordnet ist.

10. Auffindevorrichtung nach Anspruch 7, dadurch gekennzeichnet, daß die Aufnahmeeinrichtung für die Ultraschallwellen aus einer Gesamtheit von Empfängersonden (35) gebildet ist, die auf dem Boden (34) eines Auffangs (30) für eine Brennanordnung (1) befestigt sind, welcher an dem Wagen zum vertikalen Verlagern einer Absenkeinrichtung der Brennanordnung befestigt ist, der an einer Wand des Beckens angeordnet ist.

11. Auffindevorrichtung nach Anspruch 7, dadurch gekennzeichnet, daß die Aufnahmeeinrichtung für die Ultraschallwellen aus einem Wellenleiter (40) mit einem offenen Ende, in dem das untere Ansatzstück (5) der Brennanordnung (1) in Eingriff ist, und wenigstens einer Ultraschallsonde (41) die an der Wand des Wellenleiters (40) befestigt ist, gebildet ist.

12. Auffindevorrichtung nach Anspruch 11, dadurch gekennzeichnet, daß der Wellenleiter (40) eine Halbkugelform zeigt.

## Claims

1. A process for detecting unsealed fuel rods by means of ultrasonics in a fuel assembly for a nuclear reactor consisting of a bundle of mutually parallel rods (6) arranged in a framework (2, 3, 4, 5) closed by two end fittings (4, 5), the assembly (1) being immersed in the water of a pool after use in a nuclear reactor and being arranged so that the rods (6) are in a vertical position, detection of the rods whose cladding has cracks giving rise to leakages being ensured by transmission of ultrasonic waves along the length of the rods from a zone near the upper ends (9) thereof and by measuring the attenuation of the ultrasonic waves due to the presence of water inside the rods (6) whose cladding is cracked, characterized in that the ultrasonic waves are detected after propagation in the cladding of the rods (6) of the fuel assembly along their length, below the lower end fitting (5) positioned on the assembly (1).

2. A detection process according to Claim 1, characterized in that ultrasonic waves are transmitted successively along the length of each of the fuel rods (6) of the fuel assembly (1), in that the attenuation of the ultrasonic waves is determined successively for each of the fuel rods (6), and in that this attenuation is compared with a predetermined value.

3. A detection process according to Claim 2, characterized in that a single receiver probe (16) is moved below the lower end fitting (5) of the assembly, so as to carry out the detection of the ultrasonic waves transmitted in each of the fuel rods (6) of the assembly successively.

4. A detection process according to Claim 2, characterized in that the ultrasonic waves transmitted successively in each of the fuel rods (6) of the assembly are detected by a probe (20, 35) in a stationary position forming part of a set of probes arranged below the lower end fitting (5) of the fuel assembly (1).

5. A detection process according to any one of Claims 1 to 4, characterized in that the ultrasonic waves are transmitted in the fuel rods, from their upper part, the upper end fitting (4) being positioned on the assembly.

6. A detection process according to any one of Claims 1 to 4, characterized in that the ultrasonic waves are transmitted in the fuel rods (6) from their upper part, the upper end fitting (4) of the assembly being dismantled.

7. A device for detecting faulty fuel rods by means of ultrasonics in an assembly for a nuclear reactor consisting of a bundle of mutually parallel rods (6) arranged in a framework (2, 3, 4, 5) closed by two end fittings (4, 5), the assembly (1) being immersed in the water of a pool and arranged so that the rods (6) are in a vertical position and detection of the rods whose cladding has at least one crack giving rise to leakage being ensured by transmission of ultrasonic waves along the length of the rods and by measuring the attenuation of the ultrasonic waves due to the presence of water inside the rods (6) whose cladding is cracked, characterized in that the device comprises an ultrasonic transducer (11) secured to the end of an arm (12) connected to a moving device allowing the transducer (11) to be arranged successively in contact with the upper end of each of the rods (6) of the assembly and at least one means for detecting (16, 20, 34, 41, 40) the ultrasonic waves transmitted along the length of the rods (6), which are arranged below the lower end fitting (5) of the assembly.

8. A detecting device according to Claim 7, characterized in that the means for detecting (16) the ultrasonic waves consists of a receiver probe secured to the end of an arm (17) movable in two perpendicular directions of a horizontal plane situated below the lower surface of the lower end fitting (5) of the assembly (1).

9. A detecting device according to Claim 7, characterized in that the means for detecting the ultrasonic waves consists of a plurality of receiver probes (20) arranged at the bottom (21) of a socket (22) of prismatic shape, open at its upper part, in which the end fitting (5) of the assembly can engage to be arranged above the set of the receiver probes (20).

10. A detecting device according to Claim 7, characterized in that the means for detecting ultrasonic waves consists of a set of receiver probes (35) secured to the bottom (34) of a container (30) for a fuel assembly (1) stationary on the vertically movable trolley of a fuel assembly lowering device arranged against a wall of the pool.

11. A detecting device according to Claim 7, characterized in that the means for detecting ultrasonic waves consists of a waveguide (40) which has an open end in which the lower end fitting (5) of the fuel assembly (1) is engaged and at least one ultrasonic probe (41) secured to the wall of the waveguide (40).

12. A detecting device according to Claim 11, characterized in that the waveguide (40) is of hemispherical shape.
